# EUROPEAN PATENT APPLICATION

(11) **EP 4 557 031 A1**
(43) Date of publication of application: **21.05.2025**
(21) Application number: 23210966.0
(22) Date of filing: 20.11.2023
(51) Int. Cl.: G05B 19/418, G06F 9/50

(54) **ORCHESTRATION IN INDUSTRIAL PRODUCTION PLANTS**

(71) Applicant: ABB SCHWEIZ AG, 5400 Baden (CH)
(72) Inventor: ANANIEVA, Sofia, 69221 Dossenheim (DE); KOZIOLEK, Heiko, 76227 Karlsruhe (DE); HARK, Rhaban, 64331 Weiterstadt (DE)
(74) Representative: Maiwald GmbH

(57) **Abstract**

In the field of industrial automation, manual handling of orchestration tasks at a global level is labour-intensive while being prone to error and compatibility issues. There is provided a federated orchestration system. The federated orchestration system comprises: a plurality of intraplant orchestrators assigned to respective ones of a plurality of production plants, wherein each intraplant orchestrator is operative to execute one or more intraplant orchestration tasks regarding the respective production plant; and an interplant orchestrator operative to execute one or more interplant orchestration tasks. The interplant orchestrator and the intraplant orchestrators are operative to cooperate to orchestrate resources and services of the plurality of production plants.

## Description

### FIELD OF THE INVENTION

The invention relates to a federated orchestration system, an interplant orchestrator therefor, an intraplant orchestrator therefor, and corresponding methods.

### BACKGROUND

In the field of industrial automation, plant owners typically operate multiple plants with respective orchestration systems. While the orchestration system of each plant undertakes certain tasks for managing and optimizing the IT/OT infrastructure locally at the plant level, the multi-plant operator is faced with tasks at a global level that are not handled by current orchestration systems. Manual handling of these tasks is labour-intensive while being prone to error and compatibility issues.

### SUMMARY

To better address one or more of these concerns, in a first aspect of invention, there is provided a federated orchestration system comprising:
a plurality of intraplant orchestrators assigned to respective ones of a plurality of production plants, wherein each intraplant orchestrator is operative to execute one or more intraplant orchestration tasks regarding the respective production plant; and
an interplant orchestrator operative to execute one or more interplant orchestration tasks,
wherein the interplant orchestrator and the intraplant orchestrators are operative to cooperate to orchestrate resources and services of the plurality of production plants.

In a second aspect, there is provided an interplant orchestrator for a federated orchestration system, wherein the federated orchestration system comprises a plurality of intraplant orchestrators assigned to respective ones of a plurality of production plants, wherein each intraplant orchestrator is operative to execute one or more intraplant orchestration tasks regarding the respective production plant, wherein the interplant orchestrator is operative to execute one or more interplant orchestration tasks, and wherein the interplant orchestrator and the intraplant orchestrators are operative to cooperate to orchestrate resources and services of the plurality of production plants.

In a third aspect, there is provided an intraplant orchestrator for a federated orchestration system, wherein the intraplant orchestrator is operative to be assigned to a respective one of a plurality of production plants, wherein the federated orchestration system further comprises an interplant orchestrator operative to execute one or more interplant orchestration tasks, wherein the intraplant orchestrator is operative to execute one or more intraplant orchestration tasks regarding the respective production plant, and wherein the intraplant orchestrator and the interplant orchestrator are operative to cooperate to orchestrate resources and services of the plurality of production plants.

In one example, the intraplant orchestrators form part of a first level of a hierarchy, and the interplant orchestrator forms part of a second level of the hierarchy which is higher than the first level, such that the federated orchestration system orchestrates plant resources and services using multiple layers of orchestrators. The present disclosure further envisages that the federated orchestration system may comprise more than two levels of orchestrators, with the system comprising for example a further orchestrator forming part of a third level of the hierarchy which is higher than the second level. For example, plants may be grouped into sites (i.e., a site may comprise multiple plants), with the federated orchestration system comprising a site-orchestrator for each site on a level above the (intra)plant-orchestrators of the plants in the respective site, together with a company-orchestrator on a level above the multiple site-orchestrators.

The orchestration tasks (whether interplant or intraplant) relate to the automated configuring, coordinating, and managing of the resources and services. The intraplant orchestration tasks relate to the automated configuring, coordinating, and/or managing of the resources and services within a said production plant. The interplant orchestration tasks relate to the automated configuring, coordinating, and/or managing of the resources and services between two or more of the said production plants. The orchestration tasks may comprise, for example, one or more of: scheduling; distributing workloads; deployment; resource monitoring; rolling out updates. More particularly, the interplant orchestration tasks may comprise one or more of: distributing workloads across plants; applying central updates across plants ; applying higher-level directives; carrying out failover or disaster handling; initial deployment; transferring proven deployment configurations between plants; optimizing the global resource usage of the workloads; early reaction to global security issues. The intraplant orchestration tasks may comprise one or more of: deployment; restart; teardown of components of the plant; service discovery; load balancing; storage orchestration; secrets management; network management; automated update roll-outs and roll-backs; horizontal pod autoscaling.

Each intraplant orchestrator may be operative to perform intraplant scheduling for assigning one or more resources of the respective plant to execute one or more services needed by that plant. The interplant orchestrator may be operative to perform interplant scheduling for assigning one or more resources of one of the plurality of plants to execute one or more services needed by another of the plurality of plants. In this way, resource utilization and optimization is enabled both within individual plants and between plants ('cross-border').

Scheduling (whether interplant or intraplant) may be performed in accordance with one or more policies governing scheduling decisions, such as a federation policy. The policies may concern one or more of: criticality; quality of service (e.g. latency); priority; failover handling; access control; security; restrictions (e.g., geographical or legal). In one particular example, a said policy requires some services (e.g., control services) to meet latency requirements which are more stringent than those required to be met by other services (e.g., supervisory services). Stated differently, the policy may prioritise some services over other services. In such cases, the policy may dictate that some services be hosted locally at a said plant while other services may be transferred to other plants.

Interplant scheduling decision may be made based at least partially on plant data collected by the interplant orchestrator from one or more of the production plants. The plant data may comprise state data representing the state of resources, services, and/or equipment of the respective plant, based on monitoring performed by that plant. For example, the plant data may concern one or more of: resource utilization; service states; availability and downtimes of equipment due to failures or maintenance. The plant data may be usable to identify problems that cannot be solved locally at the respective plant. The plant data may be obtained from one or more distributed control systems or services. Additionally or alternatively, the plant data may be obtained from one or more manufacturing execution systems or services. In this way, the systems and methods disclosed herein enable consideration of MES level information in scheduling decisions. Examples of MES data which may be used by the federated orchestration system described herein may relate to one or more of: production schedules; work order status; start and end time of production batches; materials used; quantities produced; quality data from inspections on raw materials; equipment data, such as machine status, utilization, maintenance records; material data, such as inventory levels, material consumption; energy and utility data such as energy consumption, utilities usage; logistics and supply chain data; environmental data, such as temperature, humidity in production area; labour data, such as upcoming training sessions, shift schedules. For example, an upcoming operator training could be combined with a software update to try new features. Production downtime may be used to run diagnostic functions or reboot servers for updates.

The interplant orchestrator may be operative to propagate interplant scheduling decisions to the intraplant orchestrators. The interplant orchestrator may be operative to propagate interplant scheduling decisions according to a propagation configuration (referred to hereinbelow as a cluster configuration) which specifies which intraplant orchestrators form part of the federated orchestration system, and/or how those intraplant orchestrators may be reached, and/or a type of one or more of the intraplant orchestrators. The interplant orchestrator may be operative to generate a federation configuration which represents an interplant scheduling decision. The interplant orchestrator may be operative to derive from the federation configuration a local configuration for each of the plurality of production plants, wherein each local configuration instructs the intraplant orchestrator of the respective plant to implement at least part of the interplant scheduling decision. More particularly, the local configuration may instruct the intraplant orchestrator to deploy one or more specified services to one or more specified resources so as to implement the at least part of the interplant scheduling decision. The at least part of the interplant scheduling decision may concern resources and/or services associated with the respective plant. The local orchestrator or an operator thereof may be operative or able to reject at least part of the respective local configuration. Rejection of the least part of the local configuration by the local orchestrator or by the operator thereof may trigger the interplant orchestrator to revise the interplant scheduling decision.

The intraplant orchestrator may be operative to determine whether it has resources available to address an issue by performing a local action. The intraplant orchestrator may be operative to prioritise performing local action over requesting global action. The issue may relate for example to excessive resource utilization, and/or resource failure, and/or service failure affecting the intraplant orchestrator. The intraplant orchestrator may be operative to assign those resources to address the issue in response to determining that the resources are available. The intraplant orchestrator may be operative to forward the issue to the interplant orchestrator for global action to be taken in response to determining that the intraplant orchestrator does not have the available resources. In response to receiving an issue forwarded by one of the intraplant orchestrators, the interplant orchestrator may be operative to update the federation configuration to address the issue, and to propagate updated local configurations derived from the updated federation configuration to one or more of the intraplant orchestrators.

The federation configuration may comprise at least one resource template defining assignment of at least one resource to at least one service, according to the interplant scheduling decision. One resource template may be defined for each plant. The federation configuration may further comprise a placement configuration defining which resource template is to be propagated to which intraplant orchestrator. The at least one resource and the at least one service specified in the resource template may belong to the same plant or to different plants. The resource template for at least one plant may correspond to a type of the respective plant. The interplant orchestrator may be operative to use different resource templates corresponding to different types of plant. The resource template may specify resources to be utilized by the respective intraplant orchestrators in terms of one or more predefined resource types. The interplant orchestrator may be operative to access a resource type library storing one or more predefined resource types for selection. The resource template and/or the predefined resource types may relate to resources which are used in common between plants, i.e. plant-agnostic resources or resource types. The federation configuration may further comprise at least one override configuration which overrides at least part of one or more of the said resource templates. The override configuration may relate to at least one resource or resource type which is not used in common between plants, i.e. plant-specific resources or resource types. The federation configuration may comprise one or more policies as described elsewhere herein. The interplant orchestrator may be operative to derive the local configuration for a respective one of the plants from the federation configuration by assigning resources to services as specified in the respective resource template, optionally modified according to the respective override configuration for the plant and/or at least one of the policies.

The interplant orchestrator may be operative to roll out central updates affecting multiple plants. Additionally or alternatively, the interplant orchestrator may be operative to perform one or more maintenance tasks affecting multiple plants.

The federated orchestration system may be operative to automate merging of per-site topology specifications into inter-plant topology specifications. Additionally or alternatively, the federated orchestration system may be operative to automate derivation of per-site topology specifications from inter-plant topology specifications. In one non-limiting example, merging of per-site topology specifications into inter-plant topology specifications may comprise testing generic services (e.g., for security auditing) in one plant and then, if successful, elevating to global cluster level and requiring each plant to run the security auditing service. In one non-limiting example, derivation of per-site topology specifications from inter-plant topology specifications, each plant cluster may have special properties (e.g., user credentials, resource limitations, spatial specialities, different hardware versions), which may require plant-specific adaptions. E.g., when instantiating a global deployment template in a specific plant cluster, the passwords used in a specific plant may be inserted into the global deployment template.

The federated orchestration system may be implemented as a cluster federation system, wherein each intraplant orchestrator forms part of a respective member cluster and wherein the interplant orchestrator is implemented as a host cluster for coordinating the federation of member clusters.

In a fourth aspect of invention, there is provided a federated orchestration process comprising:
assigning a plurality of intraplant orchestrators to respective ones of a plurality of industrial plants;
executing, by each intraplant orchestrator, one or more intraplant orchestration tasks regarding the respective plant; and
executing, by an interplant orchestrator, one or more interplant orchestration tasks,
wherein the interplant orchestrator and the intraplant orchestrators cooperate to orchestrate resources and services of the plurality of plants.

In a fifth aspect, there is provided a method performed by an interplant orchestrator for a federated orchestration system, wherein the federated orchestration system comprises a plurality of intraplant orchestrators assigned to respective ones of a plurality of plants, wherein each intraplant orchestrator is operative to execute one or more intraplant orchestration tasks regarding the respective plant, the method comprising: by the interplant orchestrator, executing one or more interplant orchestration tasks, wherein the interplant orchestrator and the intraplant orchestrators cooperate to orchestrate resources and services of the plurality of plants.

In a sixth aspect, there is provided a method performed by an intraplant orchestrator for a federated orchestration system, wherein the intraplant orchestrator is assigned to a respective one of a plurality of plants, and wherein the federated orchestration system further comprises an interplant orchestrator operative to execute one or more interplant orchestration tasks, the method comprising: executing, by the intraplant orchestrator, one or more intraplant orchestration tasks regarding the respective plant, wherein the intraplant orchestrators and the interplant orchestrator cooperate to orchestrate resources and services of the plurality of plants.

The methods of any of the fourth-sixth aspect may comprise any optional features or subaspects of any of the first-third aspects, mutatis mutandis.

Any of the methods described herein may comprise the further step of orchestrating the resources and services during operation of one or more of the plurality of plants, for example to carry out an industrial process or to produce a product.

In a seventh aspect, there is provided a method comprising generating, by a federation operator, the federation configuration as described herein. In the case that the federation orchestration system is a greenfield project, the method comprises the federation operator generating the federation configuration ab initio. In the case that the federation orchestration system is a brownfield project, the method comprises the federation operator generating the federation configuration based at least partially on one or more legacy plant resource templates

The method of any of the fourth-sixth aspects may be computer implemented.

According to an eighth aspect, there is provided a computing system configured to perform the method of any of the fourth-sixth aspects.

According to a ninth aspect, there is provided a computer program (product) comprising instructions which, when executed by a computing system, enable or cause the computing system to perform the method of any of the fourth-sixth aspects.

According to a tenth aspect, there is provided a computer-readable (storage) medium comprising instructions which, when executed by a computing system, enable or cause the computing system to perform the method of any of the fourth-sixth aspects. The computer-readable medium may be transitory or non-transitory, volatile or non-volatile.

The systems and methods disclosed herein provide for orchestration of multiple control systems with cross-border resource management, considering individual as well as shared characteristics and interests. The systems and methods disclosed herein enable updates and maintenance of components which may be used in multiple plants, resource utilization among plants, dependencies between plants, and high-level directives affecting multiple plants. This stands in contrast to prior orchestrators, which only manage resources and services within a single plant, such that orchestrators of multiple plants run by a single operator function independently of each other, and higher-level orchestration tasks (e.g., rolling out updates across plants) must be applied with manual interaction.

Apart from enabling the shared use of resources, the systems and methods described herein provide a novel approach to considering higher-level properties, especially MES data, in orchestration decisions.

The systems and methods disclosed herein further provide reduced effort due to centralized control system management, all-in-one representations of the multiple plant states, and optimized management of control systems and processes due to cross-border management.

By combining individual system specifications of the plant IT/OT infrastructures (that are currently used from orchestrators to deploy and manage a single plant) into an interplant system specification, the systems and methods disclosed herein enable policies to be defined which enable the orchestrator to reach a targeted state with different strategies. This may comprise placement of software components onto the available infrastructure (cluster scheduling) and/or changing configurations of components. The interplant system specification may comprise a declarative description of the target IT and OT topologies.

By synchronizing their state representation of the control system with the interplant orchestrator during runtime, the intraplant orchestrators enable the interplant orchestrator to react to changes in the plants to derive cross-border optimizations. Plants which are out-of-sync with the interplant orchestrator retain their capability for stable execution of the control system managed by the intraplant orchestrator. As soon as synchronization is re-established, any arisen tasks may be executed.

The term "resources" is used herein to denote any resources which may be assigned to execute services within a plant or across plants. The term may refer to compute resources including for example CPU, memory, storage, or redundancy. Resources may be referred as parts or components, e.g. virtual parts or components, belonging for example to the IT/OT infrastructure of one or more plants. That is, the resources may comprise hardware and/or software that detects or causes changes, through the monitoring and/or control of plant equipment, processes and events. The resources may comprise or be comprised in one or more clusters comprising one or more (compute) nodes. In a Kubernetes implementation, resources may comprise one or more of: Pods; Services; Volumes; Namespaces; ConfigMaps; Secrets; Deployments; StatefulSets; DaemonSets; ReplicaSets; Jobs; CronJobs; PersistentVolumeClaims; PersistentVolumes; ServiceAccounts; Roles; RoleBindings; ClusterRoles; ClusterRoleBindings; Ingress; NetworkPolicies; HorizontalPodAutoscalers; CustomResourceDefinitions; ResourceQuotas; LimitRanges; Endpoints; PodTemplates; StorageClasses; Node; Events; ComponentStatuses; API ResourceLists. However, it will be understood that the present disclosure is not limited to Kubernetes or any particular orchestration tool which uses the above-recited terminology.

By "services" as used herein is meant a software service or application to which resources can be assigned for executing the service. While the services are described herein as being deployed by orchestrators, it will be understood that the orchestrators may themselves be viewed as services. The services as described herein may comprise stateful and/or containerized services. One or more services may execute control logic for automating a process.

The term "updating" as used herein in relation to the services refers to deploying a new version of an existing service or application. Updating may comprise performing a rolling update. Updating may comprise shutting down one or more old service instances and starting one or more new service instances. The federated orchestration system may utilize one or more load balancers to ensure that user requests are directed to the one or more new service instances. Updating may comprise persisting the state of the services, for example externally on a storage volume that can be accessed by the new service instances.

By "deploy" is meant that a service or part thereof is installed to run on the execution engine of a resource, e.g. a node, or that the resource is instructed to execute that service or part thereof.

By "manufacturing execution system (MES)" is meant any system used in industry to track and document the transformation of raw materials or components to finished or assembled goods. MES data may comprise any data which assists manufacturing decision-makers in optimizing or improving production output. MES data may comprise data from one or more real-time monitoring systems enabling the control of plant equipment. Typical MES applications may comprise any one or more of the following: Production Planning and Scheduling; Work Order Management; Inventory Management; Quality Management; Performance Analysis and Reporting; Resource Allocation and Utilization; Process Monitoring and Control; Maintenance Management; Document Management; Material Requirement Planning (MRP); Traceability and Genealogy; Labor Management; Energy Management; Product Lifecycle Management (PLM) Integration; Supply Chain Management; Data Collection and Acquisition; Shop Floor Control; Asset Management; Regulatory Compliance Management; Analytics and Business Intelligence; Machine Integration and loT; Collaboration and Communication Tools; Environmental, Health, and Safety Management; Integration with Enterprise Resource Planning (ERP); Change Management; Customer Relationship Management (CRM) Integration.

By "(industrial) plant" is meant herein any system used for process automation, factory automation, or warehouse automation. The plant may comprise a production plant and/or a process plant for carrying out an industrial process. The industrial process may be a continuous, batch, or discrete process. The plant may comprise one or more pipelines for transforming one or more educts or raw materials into a product. Additionally or alternatively, the plant may comprise one or more assembly lines for assembling one or more components into a product. The plant may be modular or monolithic (i.e., non-modular).

The term "interplant" is used herein to denote aspects which relate to information or actions which involve multiple plants. The term may be use interchangeably with the terms "higher-level" or "global", as appropriate.

The term "intraplant" is used herein to denote aspects which relate to information or actions which involve only a single plant. The term may be use interchangeably with the terms "lower-level" or "local", as appropriate.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 illustrates a federated orchestration system;
FIG. 2 illustrates the federated orchestration system of FIG. 1 in more detail;
FIG. 3 is a flowchart representing a method for initial deployment in the federated orchestration system of FIG. 2;
FIG. 4 is a flowchart illustrating a method of operation of the federated orchestration system of FIG. 2;
FIG. 5 depicts the method of FIG. 4 in an exemplary use case involving disaster handling; and
FIG. 6 illustrates a computing system that can be used in accordance with the systems and methods disclosed herein.

### DETAILED DESCRIPTION

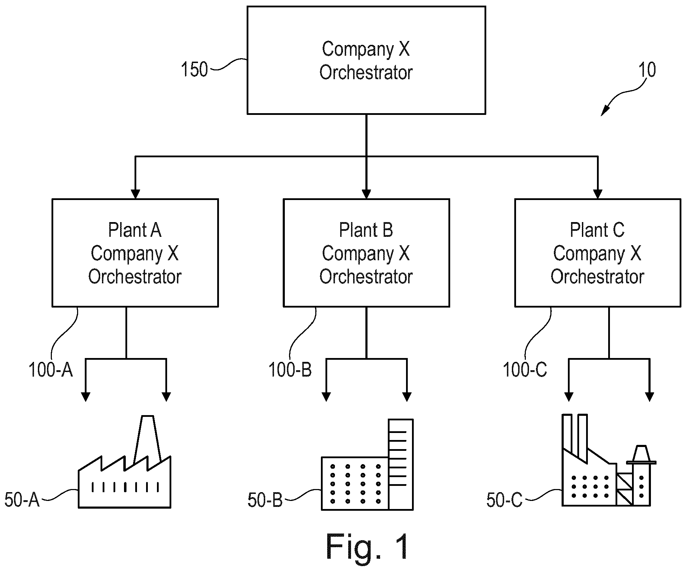

FIG. 1 illustrates a federated orchestration system 10 operative to orchestrate the IT/OT (information technology/operational technology) infrastructure and services of a plurality of production plants 50 (labelled in FIG. 1 as plants 50-A, 50-B, 50-C) using multiple layers of orchestrators. In addition to a plurality of low-level, intraplant orchestrators 100 (labelled in FIG. 1 as 100-A, 100-B, 100-C), the federated orchestration system 10 in this non-limiting example comprises a higher-level, interplant orchestrator 150.

Each intraplant orchestrator 100 executes intraplant orchestration tasks regarding the respective plant 50, whereas the interplant orchestrator 150 executes interplant tasks including for example central updates across multiple plants 50, distributing workloads across multiple plants 50, and applying higher-level directives.

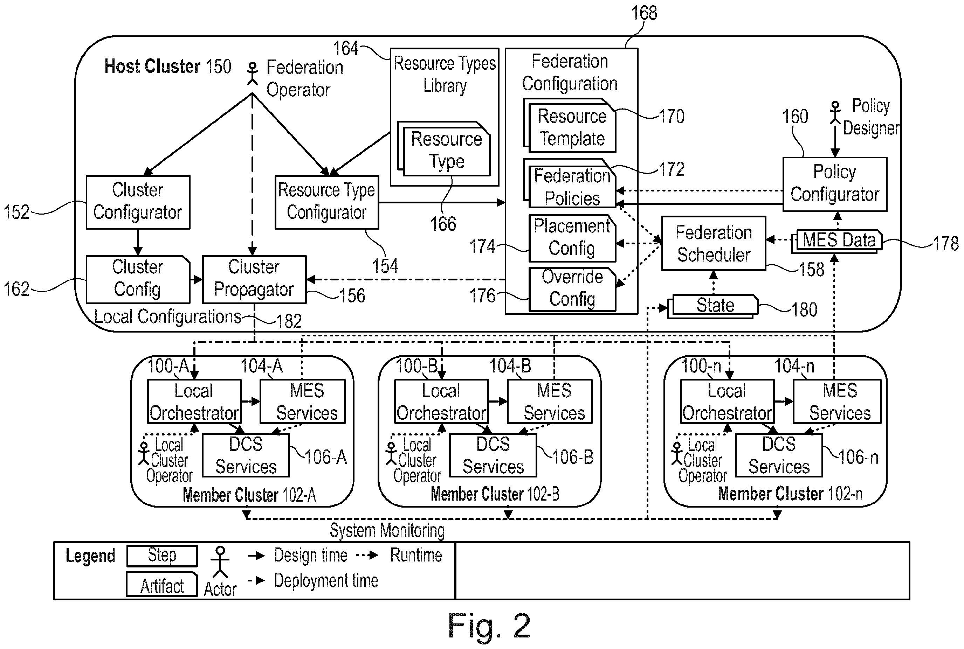

FIG. 2 illustrates the federated orchestration system 10 in more detail, which in this non-limiting example is implemented as a cluster federation system, in which each intraplant orchestrator 100 appears as a local orchestrator 100 forming part of a respective member cluster 102 (labelled in FIG. 2 as member clusters 102-A, 102-B, ..., 102-n), while the interplant orchestrator 150 appears as a host cluster 150 for coordinating the federation of member clusters 102.

The host cluster 150 comprises a cluster configurator 152, a resource type configurator 154, a cluster propagator 156, a federation scheduler 158, and a policy configurator 160.

The cluster configurator 152 is usable by the federation operator to create a cluster configuration 162, which contains all information that is needed by the cluster propagator 156 to identify and communicate with the federated member clusters 102. More particularly, the cluster configurator 152 is usable to specify which member clusters 102 exist, how they can be reached (e.g., IP-Address, VPN or SSH credentials), and the respective type of local orchestrator 100 (e.g., TOSCA or Kubernetes) to determine the API that is to be used to communicate with the member clusters 102. The federated orchestration system 10 supports both homogeneous and heterogeneous federated clusters (i.e., different types of local orchestrators such as Kubernetes and TOSCA.)

The resource type configurator 154 is operative to access a resource type library 164 storing resource types 166 for specifying a federation configuration 168 indicating resources to be federated. The federation configuration 168 in this non-limiting comprises at least one resource template 170, at least one federation policy 172, a placement configuration 174, and at least one override configuration 176.

The resource templates 170 specify resources to be utilized by particular member clusters 102. Resource templates can be specified for different types of plants, such as oil and gas refineries, or pharmaceuticals.

The federation policies 172 enable policies to be specified regarding placement of resources at different member clusters 102. Exemplary policies may concern one or more of: failover handling; access control; security checks; restrictions based on geographical location or legislature.

The placement configuration 174 specifies which resource template 170 is to be propagated by the cluster propagator 156 to which member cluster 102.

The override configuration 176 specifies optional per-cluster, plant-specific variations to the resource templates 170 that are to be applied when propagating the resource templates 170 (by way of the local configurations discussed hereinbelow) to the member clusters 102.

The federation scheduler 158 uses MES (manufacturing execution system) data 178 in addition to state data 180 obtained from the member clusters 102 for making scheduling decisions. The placement configuration 174 and the override configuration 176 are computed by the federation scheduler 158 based on the federation policies 172, the current system state 180 and the MES data 178 of the member clusters 102. The federation scheduler 158 may decide to move resources between plants 50 if beneficial or even necessary (e.g., due to resource bottlenecks, unexpectedly high demand, or component failures in any of the plants 50). This enables plants 50 to use resources from other plants 50.

The policy configurator 160 receives the MES data 178 from the member clusters 102 and enables the policy designer, who is responsible for designing the federation policies 172 involving the multiple plants 50, to make informed decisions and/or to propose optimizations to existing federation policies 172. The policy designer can also consider external sources, e.g., intentions communicated by third parties (thereby enabling collaborating companies to align their production).

The cluster propagator 156, either automatically or semi-automatically with assistance from the federation operator, propagates updated local configurations 182 to the local orchestrators 100 whenever placement configurations 174 or override configurations 176 are changed. This may be accompanied by the incrementation of a version number (i.e., upgrade) of a service running in one or more member clusters 102. The cluster propagator 156 receives, as input, the cluster configuration 162 (containing information about the member clusters 102) and the federation configuration 168 (containing the resource templates 170, the federation policies 172, the placement configuration 174, and the override configuration 176). The cluster propagator 156 applies the federation policies 172, the placement configuration 174, and the override configuration 176 to the resource templates 170 comprised in the federation configuration 168 to derive the local configuration 182 for each plant 50, and propagates the local configurations 182 to the member clusters 102 using the information contained in the cluster configuration 162. These operations may be performed also during the initial deployment stage of the federated orchestration, as discussed further hereinbelow.

Each member cluster 102 serves a respective production plant 50 and thus has resources at its disposal which are usable for operating that plant 50. In the non-limiting example shown in FIG. 2, each member cluster 102 provides MES services 104 and DCS (distributed control system) services 106 (illustrated in FIG. 2 respectively as MES services 104-A, 104-B, ..., 104-n and DCS services 106-A, 106-B, ..., 106-n) alongside its local orchestration services. Any of these services may be specified in the resource template 170 for the plant 50, potentially overridden by the corresponding per-cluster override configuration 176. Each member cluster 102 deploys the services according to its local configuration 182 as propagated by the cluster propagator 156. Plant specifics such as the type of DCS can be specified in the override configuration 176.

Each local orchestrator 100 manages low-level, intraplant tasks such as deployment, restart, and teardown of components of the plant 50. The local orchestrator 100 monitors the state of its production plant 50, such as resource utilization and problems that cannot be solved locally, and communicates the same to the federation scheduler 158 in the form of the state data 180 received via status updates. As described hereinabove, the federation scheduler 158 makes orchestration decisions at a federal level, concerning tasks such as updating the local configurations 182 to a new version (e.g., running a specific component with 3 instead of 2 replicas, or changing the user authentication configuration of all OPC UA servers to require a longer password), applying central updates in all plants 50, or instructing one plant 50 to take over parts of another plant 50 in the case that critical system failures cannot be remedied locally. For example, a supervisory user interface backend could be hosted by another plant 50 and the UI could be streamed to the user on-site, or a Historian database could take over collecting process data for long-term storage for as long as the Historian database in the present plant 50 is down. In any case, a local cluster operator can instruct the local orchestrator 100 to reject the local configuration 182. The local orchestrator 100 is capable of operating autonomously in case the federation scheduler 158 is inoperative.

Hardware resources (such as distributed control nodes) of the member clusters 102 can be discovered automatically (e.g., via services such as Redfish) or configured manually using the cluster configurator 152.

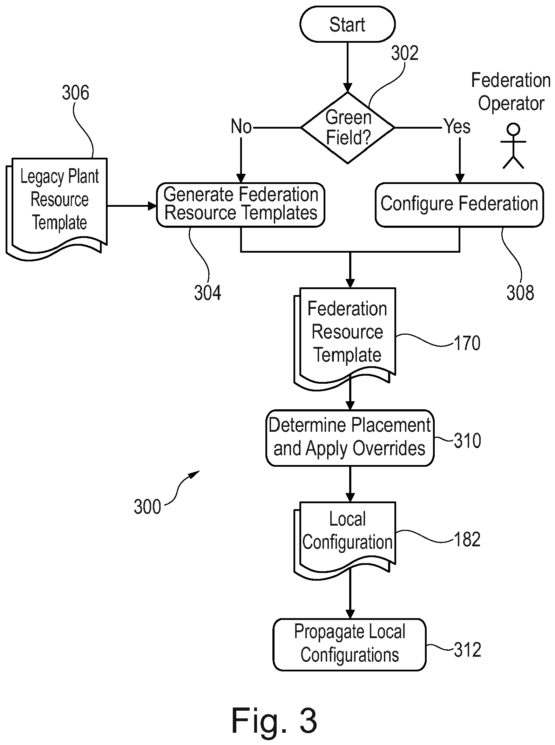

FIG. 3 is a flowchart representing a method 300 for initial deployment in the federated orchestration system 10. The method implements different strategies for adopting federated orchestration depending on whether the system 10 is a greenfield or brownfield project, which is determined in step 302.

In the case that the plant operator is already running multiple plants 50 without federated orchestration (step 302 - Greenfield? - No), the method proceeds to step 304, in which the resource templates 170 are generated based on legacy plant resource templates 306 for the existing plants 50. More specifically, common parts of the legacy plant resource templates 306 are identified, associated with resource types 166, and specified as federated resources in the resource templates 170 and federation policies 172 (i.e., as part of an interplant system specification). Parts of the legacy plant resource templates 306 that are not common, that is, those that are plant-specific, are extracted into the override configurations 176.

In the case that the plant operator is not yet operating any plants (step 302 - Greenfield? - Yes), the method proceeds to step 308, in which the federation is first configured by the federation operator, who creates the federation resource templates 170, as well as the federation policies 172, the placement configuration 174, and the plant-specific override configurations 176.

Subsequently, the placement configuration 174 and the override configurations 176 are applied (step 310) to the resource templates 170 to derive the local configuration 182 per plant, and the local configurations 182 are then propagated (step 312) by the cluster propagator 156 to the individual member clusters for deployment by the local orchestrators 100, as described hereinabove.

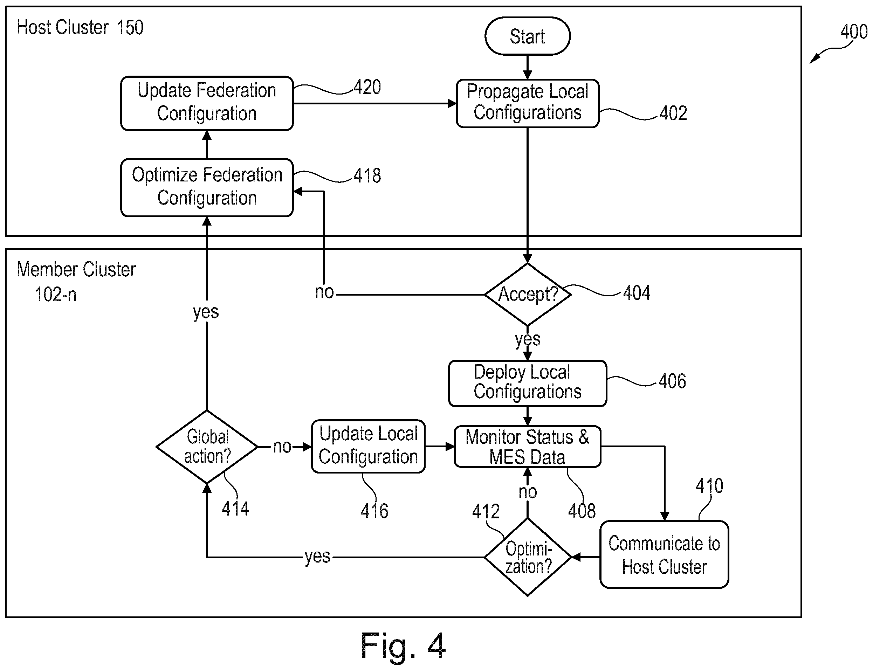

FIG. 4 is a flowchart illustrating a method 400 of operation of the federated orchestration system 10 at runtime. The interaction depicted in FIG. 4 takes place between the host cluster 150 and a single member cluster 102-n, but it will be understood that these operations may be repeated for other member clusters 102.

In step 402, the cluster propagator 156 propagates the local configurations 182 to the member cluster 102-n. If accepted by the local cluster operator (step 404 - Accept? - yes), the local configuration 182 is deployed by the responsible local orchestrator 100-n in step 406. If rejected by the local cluster operator (step 404 - Accept? - no), which may occur also during initial deployment, the host cluster 150 can further optimize the federation configuration based on the reasons for rejection in step 416, described hereinbelow.

In step 408, components of the member cluster 102-n (e.g., the DCS services 106-n and MES services 104-n) continuously monitor their current state including system bottlenecks or failures and communicate the same to the host cluster 150 in step 410. If no optimization is possible or needed (step 412 - Optimization? - no), no further action is taken. If optimization is possible or needed (step 412 - Optimization? - yes), for example in the case that a service is pushing its hosting compute node to full CPU or memory utilization, or failures must be recovered (e.g., a service crashed or a compute node failed due to a partial power outage), the local orchestrator 100-n determines (in step 414) whether it has the means to address the issue by performing a cluster local action. If the local orchestrator 100-n has the necessary resources at its disposal, it updates the local configuration 182 in step 416 to assign those resources to address the issue, which may involve for example executing a second instance of the same service on another compute node to balance load, or executing services that were running on a failed compute node on another compute node that still has the necessary capacity remaining.

If the local orchestrator 100-n does not have the necessary means (step 414 - Global action? - yes), it forwards the issue to the host cluster 150 for global action to be taken. In step 418, the host cluster 150 optimizes the federation configuration 168 to implement the global action, for example by temporarily deploying services needed by plant 50-A to resources of plant 50-B. In step 420, the host cluster 150 updates the federation configuration 168 (in which the placement and override configurations now reflect the deployment of services of plant 50-A to resources of plant 50-B). The method finally returns to step 402, in which the host cluster 150 once again propagates the local configurations 182 to the respective member clusters 102.

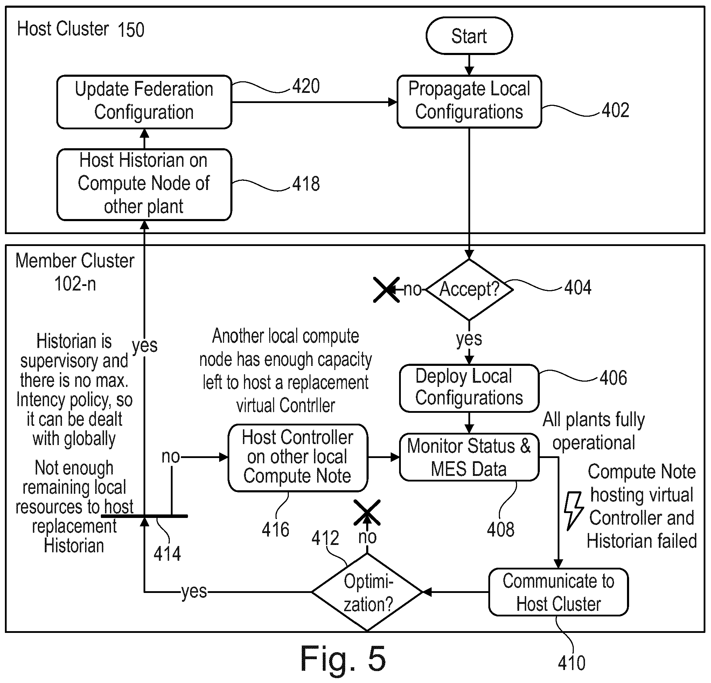

FIG. 5 depicts the method 400 of operation of FIG. 4 in an exemplary use case involving disaster handling via runtime failover. In steps 402-406, the initial propagation of the local configuration 182 from the host cluster 150 to the member cluster 102-n and its subsequent deployment by the local orchestrator 100-n are successful. At some point during the status monitoring 408, a local compute node in the member cluster 102-n fails. This node was hosting a virtual controller service as well as a historian service. To keep the plant operational, the local orchestrator 100-n decides in step 412 to optimize its resource utilization: the local member cluster 102-n has another, still running, compute node with some capacity (i.e., CPU and memory) remaining, enough to host either a replacement virtual controller or a replacement historian instance, but not both. Since there is a policy in place, such as the federation policy 172, that requires control services to meet certain latency requirements that do not apply to supervisory services such as the historian, the local orchestrator 100-n decides, in step 414, to host a replacement virtual controller locally on its remaining compute node, in step 416. It then communicates its current state with the missing historian service to the host cluster 150. The federation scheduler 158, in step 418, finds a suitable compute resource in another plant 50 to take over hosting of the historian service for the plant in distress and updates the federation configuration 168 (specifically, the resource templates 170, placement configuration 174, and override configuration 176). The cluster propagator 156 propagates the updated local configurations 182 to the affected member clusters 102-n, which accept and deploy the updated local configurations 182. The interplay of local and global orchestration (i.e., federated orchestration) has kept all plants 50 operational at all times.

Described herein is therefore a higher-level orchestrator which allows federated management of multiple plants, each served by a local member cluster comprising IT/OT infrastructure. The local orchestrators communicate their local state data and MES data to the higher-level host cluster orchestrator and rely on the higher-level orchestrator for centralized updates and maintenance as well as for load balancing and disaster handing. Yet the local orchestrators may continue to act autonomously and make local orchestration decisions even if communication to the higher-level orchestrator is disrupted. The higher-level orchestrator supports plant operators by automatically maintaining a global resource view on multiple plants based on the monitored system state and MES data, and automatically makes informed decisions on global actions relevant to multiple clusters in the federation, enabling cross-border resource use or the scheduling and rolling out of central updates.

Several use cases are envisioned with the proposed systems and methods:-Updates and maintenance: The higher-level orchestrator performs global maintenance tasks such as software updates and upgrades on common resources across all plants. It considers the state of DCS services, such as system load, and MES services, such as availability and downtimes of machines due to failures or maintenance, to make informed decisions on rolling out central maintenance tasks.

Load balancing and disaster handling: The higher-level orchestrator performs global resource scheduling by monitoring system load and, if necessary, moving virtual components across plants to (i) overcome resource bottlenecks, (ii) scale-out in case of unexpected high demand (while maintaining the advantages provided by on-premise hosting), or (iii) overcome failures of hosting resources in case of disaster.

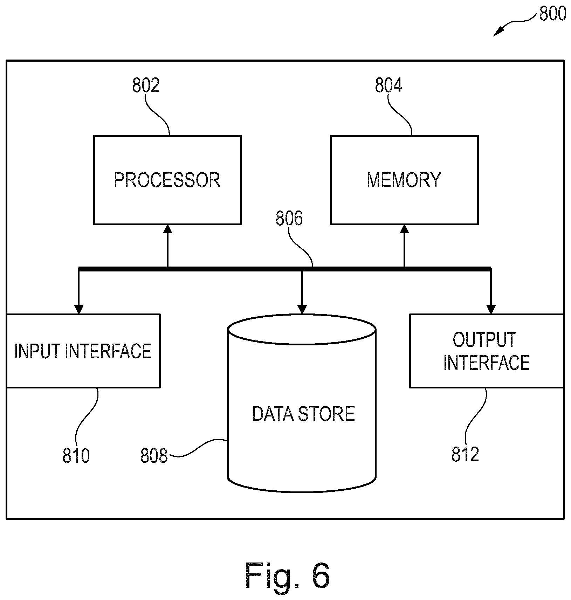

FIG. 6 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disc storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-chip systems (SOCs), complex programmable logic devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A federated orchestration system comprising:
a plurality of intraplant orchestrators assigned to respective ones of a plurality of production plants, wherein each intraplant orchestrator is operative to execute one or more intraplant orchestration tasks regarding the respective production plant; and
an interplant orchestrator operative to execute one or more interplant orchestration tasks,
wherein the interplant orchestrator and the intraplant orchestrators are operative to cooperate to orchestrate resources and services of the plurality of production plants.

2. The federated orchestration system of claim 1, wherein the intraplant orchestrators form part of a first level of a hierarchy, and wherein the interplant orchestrator forms part of a second level of the hierarchy which is higher than the first level.

3. The federated orchestration system of claim 1 or 2, wherein the interplant orchestration tasks comprise one or more of: distributing workloads across plants; applying central updates across plants; applying higher-level directives; carrying out failover or disaster handling; initial deployment.

4. The federated orchestration system of any preceding claim, wherein each intraplant orchestrator is operative to perform intraplant scheduling for assigning one or more resources of the respective plant to execute one or more services needed by that plant, and wherein the interplant orchestrator is operative to perform interplant scheduling for assigning one or more resources of one of the plurality of plants to execute one or more services needed by another of the plurality of plants.

5. The federated orchestration system of claim 4, wherein the interplant orchestrator is operative to perform the interplant scheduling in accordance with one or more policies governing scheduling decisions.

6. The federated orchestration system of claim 4 or 5, wherein the interplant orchestrator is operative to perform the interplant scheduling based at least partially on plant data collected by the interplant orchestrator from one or more of the production plants.

7. The federated orchestration system of claim 6, wherein the plant data comprises state data representing the state of resources, services, and/or equipment of the respective plant.

8. The federated orchestration system of claim 6 or 7, wherein the plant data comprises data obtained from one or more manufacturing execution systems or services.

9. The federated orchestration system of any preceding claim, wherein the interplant orchestrator is operative to generate a federation configuration which represents an interplant scheduling decision, and to derive from the federation configuration a local configuration for each of the plurality of production plants, wherein each local configuration instructs the intraplant orchestrator of the respective plant to implement at least part of the interplant scheduling decision.

10. The federated orchestration system of claim 9, wherein the federation configuration comprises at least one resource template defining assignment of at least one resource to at least one service according to the interplant scheduling decision, and wherein the federation configuration further comprises at least one override configuration which overrides at least part of the at least one resource template.

11. The federated orchestration system of any preceding claim, wherein at least one said intraplant orchestrator is operative to determine whether it has resources available to address an issue by performing a local action and to assign those resources to address the issue in response to determining that the resources are available.

12. The federated orchestration system of claim 11, wherein the said intraplant orchestrator is operative to forward the issue to the interplant orchestrator for global action to be taken in response to determining that the intraplant orchestrator does not have the available resources, and wherein the interplant orchestrator is operative to update a federation configuration to address the issue, and to propagate updated local configurations derived from the updated federation configuration to one or more of the intraplant orchestrators.

13. The federated orchestration system of any preceding claim 5, wherein the interplant orchestrator is operative to roll out central updates affecting multiple plants and/or to perform one or more maintenance tasks affecting multiple plants.

14. A computer-implemented federated orchestration process comprising:
assigning a plurality of intraplant orchestrators to respective ones of a plurality of industrial plants;
executing, by each intraplant orchestrator, one or more intraplant orchestration tasks regarding the respective plant; and
executing, by an interplant orchestrator, one or more interplant orchestration tasks,
wherein the interplant orchestrator and the intraplant orchestrators cooperate to orchestrate resources and services of the plurality of plants.

15. A computer-readable medium comprising instructions which, when executed by a computing system, cause the computing system to perform the method of claim 14.
